## Europäisches Patentamt

## European Patent Office

## Office européen des brevets

(19)

(11) Veröffentlichungsnummer: **0 208 869**
**B1**

(12)

# EUROPÄISCHE PATENTSCHRIFT

(45) Veröffentlichungstag der Patentschrift:
03.08.88

(21) Anmeldenummer: 86106699.1

(22) Anmeldetag: 16.05.86

(51) Int. Cl.⁴: **B 23 Q 11/08**

(54) **Teleskopabdeckung.**

(30) Priorität: 26.06.85 DE 3522884

(43) Veröffentlichungstag der Anmeldung:
21.01.87 Patentblatt 87/4

(45) Bekanntmachung des Hinweises auf die Patenterteilung:
03.08.88 Patentblatt 88/31

(84) Benannte Vertragsstaaten:
CH FR GB IT LI

(56) Entgegenhaltungen:
DE - A - 2 020 109
US - A - 3 716 259

(73) Patentinhaber: Gebr. Hennig GmbH, Dorfstrasse 41,
D-8045 Ismaning (DE)

(72) Erfinder: Hennig, Kurt, Georgensteinstrasse 16,
D-8000 München 71 (DE)
Erfinder: Stöhr, Albert, am Wigenberg 8, D-8015 Markt
Schwaben (DE)

(74) Vertreter: Tetzner, Volkmar, Dr.-Ing. Dr. jur.,
Van-Gogh-Strasse 3, D-8000 München 71 (DE)

**Beschreibung**

Die Erfindung betrifft eine Teleskopabdeckung entsprechend dem Oberbegriff des Anspruches 1.

Eine Teleskopabdeckung gemäss dem Oberbegriff des Anspruches 1 ist beispielsweise durch die DE-A-2 020 109 bekannt. Die Deckwand greift hierbei in eine Nut der Rückwand ein, wobei der über diese Nut und damit über die Deckwand nach oben vorstehende Teil der Rückwand bei der Auszugsbewegung einen Anschlag zur Mitnahme des nächstgrösseren Abdeckkastens bildet.

Durch die US-A-3 716 259 ist ferner bei Behältern, die beispielsweise zur Unterbringung von Instrumenten dienen, die Verwendung von Eckverbindungsprofilen bekannt, die zwei um 90° gegeneinander versetzte, nach aussen hin offene Nuten zur Aufnahme der miteinander zu verbindenden Behälterwände aufweisen.

Die Herstellung der Abdeckkästen für eine Teleskopabdeckung der im Oberbegriff des Anspruches 1 vorausgesetzten Art gestaltet sich bisher recht kompliziert. Auf dem Zuschnitt, der die Deckwand und die Seitenwände bilden soll, sind zunächst Aufzeichnungen durchzuführen (sog. Anreissen), um die Stanz- und Abkantlinien zu markieren. Nach dem Stanzvorgang (Herstellung von Ausklinkungen) erfolgt die Längskantung der Winkel, die später zur Verbindung mit der Rückwand dienen. Anschliessend werden die Schenkel abgekantet. Zur Verbindung des so vorbereiteten Grundkörpers mit der Rückwand müssen dann beide Teile massgerecht aufgespannt werden, ehe die Verschweissung oder Vernietung erfolgen kann.

Der Erfindung liegt die Aufgabe zugrunde, eine Teleskopabdeckung der im Oberbegriff des Anspruches 1 vorausgesetzen Art so auszubilden, dass sich die Abdeckkästen auf besonders einfache Weise zusammenbauen lassen.

Diese Aufgabe wird erfindungsgemäss durch die kennzeichnenden Merkmale des Anspruches 1 gelöst.

Charakteristisch für die erfindungsgemässe Teleskopabdeckung ist die Verwendung eines Verbindungsprofils, das eine Nut-Feder-Verbindung zwischen der Deckwand und der Rückwand (eventuell auch zwischen den beiden Seitenwänden und der Rückwand) gewährleistet. Durch das Verbindungsprofil werden die bisher erforderlichen aufwendigen Arbeitsgänge der Herstellung von Ausklinkungen und Abkantungen für Verbindundswecke eingespart. Die durch das Verbindungsprofil erzielte Nut-Feder-Verbindung gewährleistet ferner einen sehr einfachen, winkelgerechten Zusammenbau der Deckwand (bzw. Seitenwände) mit der Rückwand.

Das Verbindungsprofil sichert die winkelgerechte Relativlage dieser Teile insbesondere während des Schweissvorganges.

Da die äussere Leiste des Verbindungsprofils zugleich den Anschlag für die Mitnahme des nächstgrösseren Abdeckkastens bildet, entfällt die Notwendigkeit einer besonderen Justierung der Rückwand (gegenüber der Deckwand) zur Bildung dieses Anschlages.

Der nächstgrössere Abdeckkasten liegt bei der erfindungsgemässen Teleskopabdeckung jeweils auf einem glatten gezogenen Profil, was gute Gleitverhältnisse ergibt. In diesem gezogenen Verbindungsprofil können gewünschtenfalls Ausnehmungen als Ablaufrinnen oder Abstreifeinheiten vorgesehen werden.

Zweckmässige Ausgestaltungen der Erfindung sind Gegenstand der Unteransprüche und werden im Zusammenhang mit der Erläuterung zweier in der Zeichnung veranschaulichter Ausführungsbeispiele beschrieben.

In der Zeichnung zeigen

Fig. 1 einen Teil-Längsschnitt durch eine erfindungsgemässe Teleskopabdeckung,

Fig. 2 einen Schnitt längs der Linie II-II der Fig. 1,

Fig. 3 eine vergrösserte Ansicht eines langgestreckten Verbindungsprofils,

Fig. 4 einen Querschnitt durch das Verbindungsprofil längs der Linie IV-IV der Fig. 3,

Fig. 5 einen Schnitt durch ein weiteres Ausführungsbeispiel der Erfindung.

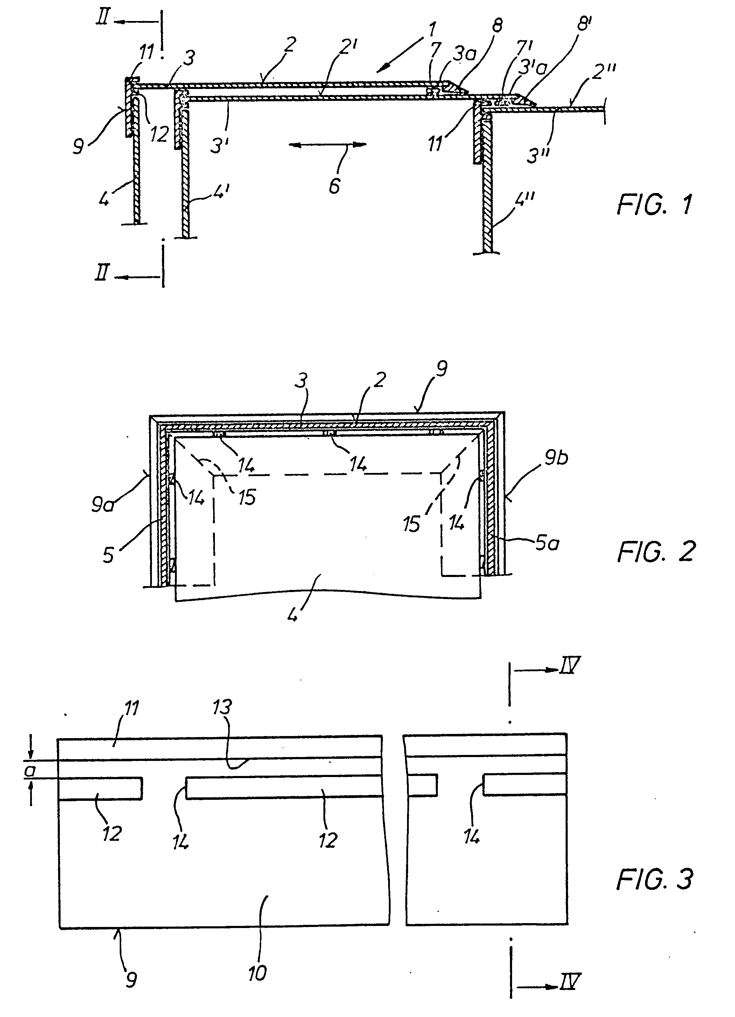

Von der gesamten Teleskopabdeckung sind in Fig. 1 lediglich drei Abdeckkästen 2,2',2'' veranschaulicht, die in ihrer Form im wesentlichen alle gleichartig ausgeführt sind, jedoch eine unterschiedliche Querschnittsgrösse in der Art aufweisen, dass alle Abdeckkästen 2,2',2'' teleskopartig ineinandergeschoben und auseinandergezogen werden können; in Fig. 1 befindet sich der rechte Abdeckkasten 2'' in seiner äussersten Auszugsstellung gegenüber dem mittleren Abdeckkasten 2', während dieser mittlere Abdeckkasten 2' fast vollkommen in den linken Abdeckkasten 2 eingeschoben ist.

Jeder Abdeckkasten 2, 2', 2'' enthält eine Deckwand 3,3' bzw. 3'', eine Rückwand 4,4' bzw. 4'' sowie — vgl. Fig. 2 — zwei Seitenwände 5,5a. Wenn die Abdeckkästen 2, 2', 2'' teleskopartig ineinandergeschoben werden, dann bildet die Rückwand 4, 4', 4'' des jeweils nächstgrösseren Abdeckkastens 2, 2' bzw. der entsprechende Rückwandbereich zugleich einen Anschlag für die ineinanderliegenden Abdeckkästen 2', 2''. Für das Auseinanderziehen der Abdeckkästen 2, 2', 2'' (vgl. ebenfalls Doppelpfeil 6) ist an dem der Rückwand 4, 4' entgegengesetzten, vorderen Ende 3a, 3'a der entsprechenden Deckwand (und zwar an deren Unterseite) eine erste Anschlagleiste 7, 7' befestigt, die in ihrer Dicke etwa dem lichten Abstand zwischen zwei übereinanderliegenden Deckwänden (z.B. 3 und 3') entspricht und bei der Auszugsbewegung der Abdeckkästen 2', 2'' mit einer zweiten Anschlagleiste in Eingriff kommt, die noch näher erläutert wird und die zur Mitnahme des nächstgrösseren Abdeckkastens 2' bzw. 2 dient, wie im rechten Teil der Fig. 1 veranschaulicht ist.

Unmittelbar im Bereich vor jeder ersten Anschlagleiste 7, 7' ist an dem vorderen Deckwandende 3a 3'a eine in üblicher Weise ausgebildete und angeordnete Abstreifleiste 8 bzw. 8' befestigt, die abdichtend auf der Oberseite der nächstunteren Deckwand 3' bzw. 3'' aufliegt und zumindest an ihrem vorderen Ende elastisch ausgebildet ist. Gleichartige Abstreifleisten können — wie an sich bekannt — auch im Bereich der übereinanderliegenden Seitenwände angebracht sein.

Es sei an dieser Stelle ausserdem noch bemerkt, dass die Deckwände 3,3',3''...sowie die Seitenwände 5, 5a allerAbdeckkästen 2, 2', 2''...im allgemeinen etwa parallel zur Oberfläche bzw. Seitenfläche der — nicht veranschaulichten — zu schützenden Führungsbahn einer Werkzeugmaschine verlaufen, wobei die Abdeckkästen 2, 2', 2''...beispielsweise durch ihre Rückwände 4, 4', 4''...gleitend auf der Oberfläche der Führungsbahn abgestützt sein können.

Von besonderer Bedeutung ist, dass zur Verbindung der Rückwand 4, 4', 4'' mit der zugehörigen Deckwand 3, 3', 3'', einerseits und zur Verbindung dieser Rückwand mit den jeweils zugehörigen Seitenwänden 5,5a andererseits für jeden Abdeckkasten 2, 2', 2''...drei langgestreckte Profile (Verbindungsprofile) 9, 9a, 9b vorgesehen sind (vgl. auch Fig. 2).

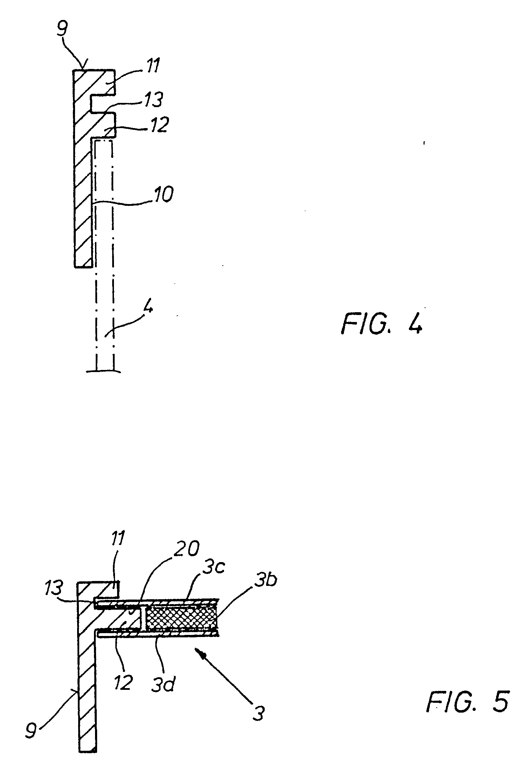

Ein solches langgestrecktes Verbindungsprofil sei im folgenden anhand der Fig. 3 und 4 näher erläutert.

Dieses Verbindungsprofil 9 enthält auf seiner einen — in Bezug auf den zugehörigen Abdeckkasten inneren — Breitseite 10 in der Nähe von deren oberem Längsrand zwei in Längsrichtung dieses Profils 9 verlaufende parallele Leisten 11,12, deren lichter Abstand a nur wenig grösser als die Wanddicke der zugehörigen Deckwand (z.B. 3) ist, so dass diese Deckwand in die von den beiden parallelen Leisten 11 und 12 gebildete Nut 13 eingesetzt und durch diese beiden Leisten 11, 12 etwa senkrecht zur Breitseite 10 des Profils gehalten werden kann (vgl. hier zusätzlich auch Darstellung in Fig. 1).

Von diesen beiden parallelen Leisten 11 und 12 des Verbindungsprofils 9 bildet die obere, äussere Leiste 11 zugleich den Anschlag für die Mitnahme des nächstgrösseren Abdeckkastens. Für die Erläuterung der Teleskopabdeckung 1 gemäss Fig. 1 bedeutet dies somit, dass diese obere Leiste 11 gleichzeitig die zweite Anschlagleiste bildet, die bei der Auszugsbewegung der Abdeckkästen 2, 2', 2'' mit der ersten Anschlagleiste 7, 7' des nächstgrösseren Abdeckkastens in Eingriff kommt und dadurch die grösste Auszugslänge zweier ineinanderliegender Abdeckkästen (z.B. 2',2'') begrenzt.

Bei dieser Ausführungsform des langgestreckten Verbindungsprofils 9 bildet die innere Leiste 12 bei der Montage zugleich einen Anschlag für die flach auf der inneren Breitseite 10 aufliegende Rückwand 4 des zugehörigen Abdeckkastens 2, wie in Fig. 4 durch die strichpunktiert ergänzte Rückwand 4 veranschaulicht ist.

Des weiteren ist es vorteilhaft, wenn die innere Leiste 12 des Verbindungsprofils 9 — wie in den Fig. 2 und 3 veranschaulicht — in Abständen derart unterbrochen ist, dass durch diese Unterbrechungen Kammern 14 zur gemeinsamen Verschweissung des Verbindungsprofils 9 mit der Rückwand und der Deckwand gebildet sind.

Alle langgestreckten Verbindungsprofile 9, 9a, 9b können denselben Querschnitt aufweisen und mit ihren Leisten einstückig als gezogenes Profil (Ziehprofil) ausgeführt sein, so dass die Herstellung dieser Verbindungsprofile besonders einfach ist. Die Ausbildung dieser Verbindungsprofile 9, 9a, 9b als Ziehprofile hat noch den besonderen Vorteil, dass diese relativ flachen, beispielsweise aus Stahl bestehenden Profile ausgezeichnete Gleiteigenschaften besitzen, die dem teleskopartigen Ineinanderschieben und Auseinanderziehen der Abdeckkästen besonders förderlich sind.

Wie bereits erwähnt worden ist, können alle Verbindungsprofile 9, 9a, 9b denselben Profilquerschnitt aufweisen, wobei die Rückwand (z.B. 4) nicht nur mit der zugehörigen Deckwand (z.B. 3), sondern auch mit den beiden zugehörigen Seitenwänden 5, 5a durch die beiden weiteren langgestreckten Verbindungsprofile 9a, 9b, in der gleichen Weise wie zuvor geschildert verbunden sein können (vgl. Fig. 2); die seitlich angeordneten Verbindungsprofile 9a, 9b unterscheiden sich somit von dem oberen Verbindungsprofil 9 (für die Deckwand) lediglich durch die Länge.

Für den Zusammenbau eines Abdeckkastens (z.B. 2) ist es nun besonders zweckmässig, wenn die drei zugehörigen Verbindungsprofile 9, 9a, 9b, unter sich einen einseitig (nach unten) offenen Verbindungsprofilrahmen bilden (wie in Fig. 2 gestrichelt angedeutet). Hierbei sind jeweils die beiden einander gegenüberliegenden Enden von je zwei benachbarten Verbindungsprofilen 9a und 9 bzw. 9 und 9b auf Gehrung (vgl. Gehrungslinien 15) geschnitten und rechtwinklig zueinander zusammengesetzt (ggf. durch einige Schweissstellen aneinandergeheftet).

Die Deckwand 3 und die beiden Seitenwände 5, 5a können nun in der oben geschilderten Weise in die zugehörige Nut 13 zwischen den parallelen Leisten 11 und 12 in der vorbestimmten Stellung angeordnet werden, und auch die Rückwand 4 wird in der anhand Fig. 4 erläuterten Weise flach auf die Breitseite 10 der Profile 9, 9a, 9b aufgelegt (bis zum Anschlag der inneren Leisten 12). Diese rasch und einfach herzustellende lose Zusammenordnung der genannten Teile stellt die genaue Zusammenbaulage dar, so dass die Teile in einem Schweissvorgang gleichzeitig miteinander verbunden werden können, indem vor allem in den geschilderten Schweisskammern 14 das abschnittsweise Zusammenschweissen vorgenommen wird.

Fig. 5 zeigt ein weiteres Ausführungsbeispiel der Erfindung. Die Deckwand 3 ist hierbei aus einem Verbundwerkstoff hergestellt, der einen vorzugsweise aus Kunststoff bestehenden Kern 3b und zwei vorzugsweise metallische Deckschichten 3c und 3d enthält. Die dem Verbindungsprofil 9 zugekehrte Kante der Deckwand ist mit einer Nut 20 versehen, deren Breite beim dargestellten Ausführungsbeispiel der Stärke des Kernes 3b entspricht.

Die Abmessungen der Nut 20 entsprechen ferner den Abmessungen der inneren bzw. unteren Leiste 12 des Verbindungsprofils 9. Die Nut 13 zwischen den Leisten 11 und 12 des Verbindungsprofils 9 ist bei diesem Ausführungsbeispiel schmäler als bei der Variante gemäss Fig. 4; die Stärke der Nut 13 entspricht etwa der Stärke der Deckschicht 3c.

Bei dem Ausführungsbeispiel gemäss Fig. 5 wird die Nut-Feder-Verbindung zwischen der Deckwand 3 und dem Verbindungsprofil 9 dadurch hergestellt, dass die Deckwand 3 mit ihrer Nut 20 formschlüssig auf die Leiste 12 des Verbindungsprofils 9 aufgeschoben wird. Die äussere Leiste 11 gewährleistet hierbei eine zusätzliche Stabilisierung.

**Patentansprüche**

1. Teleskopabdeckung, bestehend aus einer Anzahl von teleskopartig ineinanderschiebbaren Abdeckkästen (2, 2', 2''), die eine Deckwand (3), zwei Seitenwände (5, 5a) und eine Rückwand (4) enthalten, wobei ein am rückwärtigen Ende eines Abdeckkastens über die Deckelwand vorstehender Teil dieses Abdeckkastens bei der Auszugsbewegung einen Anschlag zur Mitnahme des nächstgrösseren Abdeckkastens bildet, gekennzeichnet durch die Kombination folgender Merkmale:

a) wenigstens zur Verbindung der Rückwand (4) mit der Deckwand (3) ist ein langgestrecktes Profil (9) vorgesehen;

b) das Verbindungsprofil (9) enthält auf einer Breitseite (10) nahe deren Längsrand zwei in Längsrichtung des Profils verlaufende parallele Leisten (11, 12), die zwischen sich eine Nut (13) einschliessen;

c) wenigstens ein Teil der Deckwand (3) ist in die Nut (13) des Verbindungsprofils (9) derart einsetzbar, dass die Deckwand durch die Leisten (11, 12) in einem vorbestimmten Winkel zur Breitseite des Profils gehalten ist;

d) die äussere Leiste (11) bildet zugleich den Anschlag für die Mitnahme des nächstgrösseren Abdeckkastens;

e) die innere Leiste (12) bildet bei der Montage zugleich einen Anschlag für die flach auf der Breitseite (10) des Verbindungsprofils (9) aufliegende Rückwand (4).

2. Teleskopabdeckung nach Anspruch 1, dadurch gekennzeichnet, dass der Abstand (a) der Leisten (11, 12) des Verbindungsprofils (9) nur wenig grösser als die Wandstärke der Deckwand (3) ist, so dass die gesamte Deckwand in die Nut (13) einsetzbar ist.

3. Teleskopabdeckung nach Anspruch 1, gekennzeichnet durch folgende weitere Merkmale:

f) wenigstens die Deckwand (3) ist aus einem Verbundwerkstoff hergestellt, der einen vorzugsweise aus Kunststoff bestehenden Kern (3b) und zwei äussere, vorzugsweise metallische Deckschichten (3c, 3d) enthält;

g) die dem Verbindungsprofil (9) zugewandte Kante der Deckwand (3) ist mit einer Nut (20) versehen, deren Breite der Breite der inneren Leiste (12) des Verbindungsprofils (9) entspricht, wobei die innere Leiste (12) des Verbindungsprofils formschlüssig in diese Nut (20) eingreift.

4. Teleskopabdeckung nach Anspruch 1, dadurch gekennzeichnet, dass zur Verbindung der Rückwand (4) mit den beiden Seitenwänden (5, 5a) zwei weitere langgestreckte Verbindungsprofile (9a, 9b) mit je zwei in Abstand voneinander angeordneten Leisten (11, 12) vorgesehen sind.

5. Teleskopabdeckung nach Anspruch 4, dadurch gekennzeichnet, dass die drei langgestreckten Verbindungsprofile (9, 9a, 9b) eines jeden Abdeckkastens (2) einen einseitig offenen Verbindungsprofilrahmen bilden, wobei die beiden einander gegenüberliegenden Enden von je zwei benachbarten Verbindungsprofilen (9a, 9 bzw. 9b) auf Gehrung (15) geschnitten und entsprechend den vorgegebenen Winkeln des Abdeckkastens zusammengesetzt sind.

6. Teleskopabdeckung nach Anspruch 4, dadurch gekennzeichnet, dass die innere Leiste (12) jedes Verbindungsprofils (9, 9a, 9b) in Abständen in der Weise unterbrochen ist, dass diese Unterbrechungen Kammern (14) zur gemeinsamen Verschweissung des Verbindungsprofils mit der Rückwand (4) und der Deckwand (3) bzw. den Seitenwänden (5a, 5b) bilden.

7. Teleskopabdeckung nach Anspruch 4, dadurch gekennzeichnet, dass alle langgestreckten Verbindungsprofile (9, 9a, 9b) mit ihren Leisten (11, 12) einstückig als vorzugsweise gezogene Stahlprofile ausgeführt sind.

**Claims**

1. Telescopic covering consisting of a plurality of cover boxes (2, 2', 2'') which can be pushed telescopically into one another and comprise a top wall (3), two side walls (5, 5a) and a rear wall (4), in which a part of a cover box which projects over the top wall at the rear end of this cover box forms a stop for the entrainment of the next larger cover box during the extending movement, characterised by the combination of the following features:

a) an elongated profile (9) is provided at least for connection of the rear wall (4) to the top wall (3);

b) the connecting profile (9) contains on one broad side (10) near the long edge thereof two parallel flanges (11, 12) which run in the longitudinal direction of the profile and enclose a groove (13) between them;

c) at least one part of the top wall (3) can be inserted into the groove (13) in the connecting profile (9) in such a way that the top wall is retained by the flanges (11, 12) at a predetermined angle to the broad side of the profile;

d) the outer flange (11) at the same time forms the stop for the entrainment of the next larger cover box;

e) during assembly the inner flange (12) at the same time forms a stop for the rear wall (4) which lies flat on the broad side (10) of the connecting profile (9).

2. Telescopic covering as claimed in claim 1, characterised in that the distance (a) between the flanges (11, 12) of the connecting profile (9) is only slightly greater than the thickness of the top wall (3), so that the entire top wall can be inserted into the groove (13).

3. Telescopic covering as claimed in claim 1, characterised by the following further features:

f) at least the top wall (3) is made from a compound material which contains a core (3b) which is preferably made from plastics material and two outer coating layers (3c, 3d) which are preferably metallic;

g) the edge of the top wall (3) facing the connecting profile (9) is provided with a groove (20) the breadth of which corresponds to the breadth of the inner flange (12) of the connecting profile (9), so that the inner flange (12) of the connecting profile engages in this groove (20) so as to lock positively.

4. Telescopic covering as claimed in claim 1, characterised in that for connection of the rear wall (4) to the two side walls (5, 5a) two further elongated connecting profiles (9a, 9b) are provided, each having two flanges (11, 12) arranged spaced from one another.

5. Telescopic covering as claimed in claim 4, characterised in that three elongated connecting profiles (9, 9a, 9b) of any one cover box (2) form a connecting profile frame which is open on one side, the two ends which lie opposite one another of any two adjacent connecting profiles (9a, 9 or 9, 9b) being mitred (15) and assembled according to the predetermined angles of the cover box.

6. Telescopic covering as claimed in claim 4, characterised in that the inner flange (12) of each connecting profile (9, 9a, 9b) has openings in it at intervals in such a way that these openings form chambers (14) for common welding of the connecting profile to the rear wall (4) and the top wall (3) or the side walls (5a, 5b).

7. Telescopic covering as claimed in claim 4, characterised in that all elongated connecting profiles (9, 9a, 9b) can be constructed as preferably drawn steel profiles with integral flanges (11, 12).

**Revendications**

1. Recouvrement télescopique constituant une chape de protection et se composant de plusieurs caissons de recouvrement (2, 2', 2'') pouvant s'emboîter télescopiquement les uns dans les autres et comprenant une cloison de couverture (3), deux cloisons latérales (5, 5a) et une cloison arrière (4), une partie de ce caisson débordant de la cloison de couverture à l'extrémité arrière et formant une butée d'entraînement du caisson de la dimension supérieure suivante lors du mouvement de déploiement, caractérisé par la combinaison des particularités suivantes:

a) un profilé allongé (9) et prévu pour relier au moins la cloison arrière (4) à la cloison de couverture (3);

b) le profilé de liaison (9) comprend sur un côté large (10), à proximité du bord longitudinal, deux nervures parallèles (11, 12) orientées dans la direction de la longueur du profilé et formant entre elles une gorge (13);

c) au moins une partie de la cloison de couverture (3) peut s'insérer dans la gorge (13) du profilé (9) de manière que les nervures (11, 12) tiennent cette cloison de couverture sous un angle prescrit par rapport au côté large du profilé;

d) la nervure extérieure (11) forme simultanément la butée d'entraînement du caisson de la dimension supérieure suivante;

e) la nervure intérieure (12) forme simultanément lors du montage une butée pour la cloison arrière (4) reposant à plat sur le côté large (10) du profilé de liaison (9).

2. Recouvrement télescopique selon la revendication 1, caractérisé en ce que la distance (a) séparant les nervures (11, 12) du profilé (9) n'est que faiblement supérieure à l'épaisseur le la cloison de couverture (3) de manière que cette dernière puisse s'intégrer dans la totalité de la gorge (13).

3. Couverture télescopique selon la revendication 1, caractérisé par les autres particularités suivantes:

f) au moins la cloison de couverture (3) est réalisée en un matériau composite comprenant un coeur (3b) de préférence en matière plastique et deux couches extérieures de couverture (3c, 3d) de préférence métalliques;

g) le bord de la cloison de couverture (3) tourné vers le profilé de liaison (9) comporte une rainure (20) dont la largeur correspond à celle de la nervure intérieure (12) du profilé (9), la nervure intérieure (12) dudit profilé de liaison s'insérant par complémentarité de forme dans cette rainure (20).

4. Recouvrement télescopique selon la revendication 1, caractérisé en ce que deux autres profilés allongés (9a, 9b) comportant chacun deux nervures (11, 12) placées à distance l'une de l'autre sont prévus pour relier la cloison arrière (4) aux deux cloisons latérales (5, 5a).

5. Recouvrement télescopique selon la revendication 4, caractérisé en ce que les trois profilés allongés (9, 9a, 9b) de chaque caisson (2) forment un cadre de liaison ouvert d'un côté, les extrémités situées face à face de deux profilés voisins (9a, 9 ainsi que 9, 9b) comportant chacune une découpe en onglet (15) et étant assemblées suivant les angles prescrits du caisson.

6. Recouvrement télescopique selon la revendication 4, caractérisé en ce que la nervure intérieure (12) de chaque profilé de liaison (9, 9a, 9b) comporte à certains intervalles des interruptions qui forment des chambres (14) d'assemblage par soudage du profilé avec la cloison arrière (4), avec la cloison de couverture (3) ainsi qu'avec les cloisons latérales (5a, 5b).

7. Recouvrement télescopique selon la revendication 4, caractérisé en ce que tous les profilés allongés de liaison (9, 9a, 9b) sont réalisés en une pièce avec leurs nervures (11, 12), de préférence sous forme de profilés d'acier produits par étirage ou par laminage.

FIG. 1

FIG. 2

FIG. 3

FIG. 4

FIG. 5